Europäisches Patentamt

European Patent Office

Office européen des brevets

(19)

(11) Veröffentlichungsnummer: **0 627 384 B1**

(12) **EUROPÄISCHE PATENTSCHRIFT**

(45) Veröffentlichungstag der Patentschrift: **20.09.95**

(51) Int. Cl.6: **C01D 3/14**

(21) Anmeldenummer: **93108894.2**

(22) Anmeldetag: **03.06.93**

(54) **Verfahren und Vorrichtung zur Behandlung eines Kaliumchloridgemenges.**

(43) Veröffentlichungstag der Anmeldung:
**07.12.94 Patentblatt 94/49**

(45) Bekanntmachung des Hinweises auf die
Patenterteilung:
**20.09.95 Patentblatt 95/38**

(84) Benannte Vertragsstaaten:
**AT BE DE ES FR GB IT NL**

(56) Entgegenhaltungen:
**FR-A- 2 646 842
GB-A- 2 080 779
US-A- 4 248 601
US-A- 4 385 902**

(73) Patentinhaber: **KALI UND SALZ AKTIENGE-
SELLSCHAFT
Postfach 10 20 29
D-34111 Kassel (DE)**

(72) Erfinder: **Bakardjiev, Ivan, Dr.
Biener Busch 24
W-3000 Hannover (DE)**
Erfinder: **Beher, Hans Werner
Justus von Liebig-Strasse 9
W-3202 Bad Salzdetfurth (DE)**
Erfinder: **Stahl, Ingo, Dr.
Staufenbergstrasse 31
W-3502 Vellmar (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren und eine Vorrichtung zur Behandlung eines Kaliumchloridgemenges mit Körnern unterschiedlicher Größe, insbesondere mit Körnern bis zu 1,5 mm, bei dem das trockene oder feuchte Kaliumchlorid mit einer Kaliumchlorid-Lösung angemaischt und in kontinuierlichem Kreislauf einem Lösegefäß zugeführt wird.

Aus Kalilagerstätten gewonnenes Rohsalz enthält in Deutschland bis zu 75 % Natriumchlorid und verschiedene Nebenbestandteile, wie Magnesium und Calcium in Form von Chloriden, Sulfaten und Bromiden.

Der Qualitätsstandard des daraus erzeugten Kaliumchlorids liegt bei einem Wertstoffgehalt von 60 bis 62 % $K_2O$; dies entspricht einer Reinheit von 95 bis 98 % Kaliumchlorid im Fertigprodukt.

Bei den Gewinnungsprozessen können, bedingt durch die Werkstoffe der Anlagen, auch Schwermetallspuren (Chrom, Nickel, Eisen, Molybdän und Vanadium) in das Salz gelangen.

Da die Verunreinigungen in unterschiedlichen Größenordnungen vorliegen, ist das Problem der Produktveredelung vielfältig. Eine Verbesserung des Produktes bedeutet an erster Stelle eine Erhöhung der gesamten Reinheit; dies ist einer selektiven Verminderung bestimmter Verunreinigungen gleichzusetzen.

Für die Verwendung des Kaliumchlorids in der Praxis spielt außerdem die Korngröße bzw. Kornverteilung eine wichtige Rolle. Wenn nicht ausschließlich ein "enger Kornschnitt" gewünscht wird, ist das "staubfreie" Produkt erstrebenswert. Die Minimierung bzw. die Beseitigung der feinsten Körner, die für die Staubbildung verantwortlich sind, ist eine der wichtigsten Aufgaben.

Ziel der vorliegenden Erfindung ist es, in dem vorgeschlagenen Prozeß sowohl eine Reinheit des gewonnenen Kaliumchlorids um mehr als 98 % zu erreichen als auch die Korngröße gezielt zu beeinflussen.

Bei Erörterung von bereits bekannten Verfahren zur Gewinnung von Kaliumchloridprodukten mit größerer Reinheit wird nicht auf die fraktionierte Kristallisation von Rohsalzlösungen eingegangen, da mit diesen Prozessen eine Reinheit von mehr als 98 % nicht zu erreichen ist.

Die US-PS 4.385.902 (= DE-PS 28 52 925) schlägt ein Verfahren zur Reinigung von Kaliumchloridkristallen mit einem Kaliumchloridgehalt von mehr als 97,5 % durch Auslaugen mit einer kaliumchloridgesättigten Lösung bei isothermen Bedingungen von 20 bis 70 °C vor. Der Natriumchloridgehalt der Lösung muß dabei unter 25 g/l, vorzugsweise unter 15 g/l, liegen. Die Behandlung dauert 0,5 bis zu 18 Stunden, wobei die Geschwindigkeit des Auslaugungsprozesses mit der Zunahme der ausgetragenen Natriumchloridmengen stark abnimmt. 70 % des ursprünglichen Natriumchloridgehaltes wird in den ersten vier Stunden ausgetragen, die nächsten 20 % erfordern einen Zeitaufwand von 12 Stunden. Die Geschwindigkeit des Prozesses ist von der Größe und dem Aufbau der Körner stark abhängig und läßt sich durch eine Temperaturerhöhung nur wenig beeinflussen.

Neben der Verminderung des Natriumchloridgehaltes als Hauptverunreinigung wird auch eine Senkung des Magnesium-, Calcium- und Bromgehalts festgestellt.

In der DE-PS 31 29 042 wird durch Einsatz einer im Gegenstrom arbeitenden Auslaugkolonne eine Verbesserung des Verfahrens erzielt. In diesem Falle sind Natriumchloridkonzentrationen in der Behandlungslösung bis 45 g/l zulässig, vorzugsweise wird eine Konzentration von weniger als 25 g/l empfohlen. Ein weiterer Vorteil ist, daß auch gröbere Körner mit einem Durchmesser bis 4,7 mm gereinigt werden können.

In der DE-PS 40 14 370 wird ein Digerierungs-Kristallisationsverfahren beschrieben, bei dem kleine, verunreinigte Kristalle in einem wässrigen Medium mit größeren reineren Kristallen gemeinsam ausgeschwemmt werden. Dabei findet gleichzeitig eine Auflösung der kleineren Kristalle, deren Größenordnung zwischen 0,1 und 50 $\mu$m liegt, und ein Wachstum der KaliumchloridProduktkristalle statt. Da keine Verdampfung erforderlich ist, um das Produkt Kaliumchlorid zu erzielen, arbeitet dieses Verfahren mit einem wesentlich geringeren Energieaufwand als die Umkristallisationsverfahren. Es wird dabei zwar ein Kristallisat mit vergrößerten Körnern gewonnen, aber insgesamt bleibt das erzielte Produkt zu feinkörnig.

In der US-PS 681 407 erfolgt eine Umkristallisation durch Erwärmung der Suspension unter Druck. Die nachfolgende Entspannung und die Einführung von neuen Komponenten, die z.B. Magnesiumionen, führen zu einer Aussalzung.

Ausgehend vom gegenwärtigen Stand des Wissens und der Technik zur Reinigung von Kaliumchlorid mit Kaliumchlorid-Lösungen, wurden folgende Schritte zur Verbesserung bzw. Optimierung der Verfahrensweise vorgenommen.

Bei der Reinigung von Kaliumchlorid-Kristallen muß im Gegensatz zur DE-PS 31 29 042, in der angenommen wird, daß "die Verteilung der anorganischen Salzverunreinigungen im allgemeinen gleichmäßig über die Kaliumchloridteilchen ist", mit einer ungleichmäßigen Verteilung der Verunreinigungen in Abhängigkeit von der Korngröße gerechnet werden. Die gröberen Kristalle sind durch Einschlüsse von

EP 0 627 384 B1

Mutterlauge stärker verunreinigt. Bei den kleineren Körnern, die eine größere spezifische Oberfläche besitzen, erhöht sich dagegen die anhaftende Menge der in der Lösung vorhandenen Nebenbestandteile. Daraus folgt, daß die Körner verschiedener Korngröße unterschiedlich behandelt werden müssen, um eine gleichmäßige Verminderung der Verunreinigungen zu erzielen.

Die Auslaugung der Fremdstoffe durch Behandlung der Kaliumchloridkörner mit einer Lösung ist ein heterogener Prozeß. Das niedrigere chemische Potential der Verunreinigungen in der Lösung ist die treibende Kraft, die die Auswanderung der Fremdstoffe bis zur Einstellung eines Gleichgewichts möglich macht. Es handelt sich dabei um einen typischen Diffusionsprozeß, bei dem die Geschwindigkeit mit dem Fortschreiten des Prozesses abnimmt, da vom Korninneren her Konzentrationsprofile entstehen. Um einen gleichmäßigen Abbau der Verunreinigungen zu erreichen, müssen gröbere Körner bei gleichen Bedingungen länger ausgelaugt werden als die feineren Körner.

Mikroskopische und andere Untersuchungen haben ergeben, daß bei der Kristallisation von Kaliumchlorid aus wäßrigen Lösungen keine Einkristalle entstehen, sondern Aggregate und Agglomerate, deren Urpartikel unterschiedliche Dimensionen haben können. Es ist daher mit einem spezifischen Verhalten bei der Behandlung verschiedener Produkte zu rechnen. Dies erfordert eine höhere Flexibilität bei der Einstellung der Verfahrensbedingungen.

Zusammenfassend läßt sich feststellen, daß sowohl die Korngrößenverteilung als auch der Kornaufbau für den Zeitablauf des Prozesses entscheidend sind.

Ziel ist es, ein Verfahren zur Reinigung von Kaliumchlorid durch Behandlung mit kaliumchloridhaltigen Lösungen mit folgenden Vorteilen gegenüber den bekannten Verfahren zu schaffen:

1. Größere Geschwindigkeit des Verfahrensablaufs,
2. differenzierte Behandlung je nach den vorliegenden Korngrößenanteilen,
3. variable Einstellung der gewünschten Reinheit,
4. gezielte Beeinflussung der Korngroße des gereinigten Produktes.

Temperaturerhöhungen führen, wie aus der DE-PS 28 52 925 bekannt ist, zwar zu einer meßbaren Beschleunigung des Verfahrens, jedoch treten gleichzeitig verschiedene negative Faktoren auf.

Durch den Konzentrationsanstieg in der Kaliumchlorid-Lösung kommt es zu einer vergrößerten Kaliumchloridmenge pro t behandeltes Produkt. Größere Verdampfungsgeschwindigkeiten führen außerdem zu unerwünschten Kaliumchloridabscheidungen auf den behandelten Körnern. Unter diesen Umständen ist eine maximale Temperatur von 60 - 70 °C vertretbar.

Eine Verkürzung der Strecke für den Diffusionsprozeß durch Zerkleinerung der Körner ist nur beschränkt zulässig, da sich die spezifische Kornoberfläche vergrößert und dies zu einer Erhöhung der Adsorptionskapazität und Anhäufung der Verunreinigungen an der Kornoberfläche führt.

Eine "kontrollierte Anlösung" von etwa zehn Prozent des Kornvolumens mit untersättigter Kaliumchlorid-Lösung führt dagegen zu einer Prozeßbeschleunigung von etwa einer Zehnerpotenz. Je größer der Anlösungsgrad, um so mehr Verunreinigungen werden pro Zeiteinheit aus dem Volumen der Körner entfernt. Die Anlösung der Körner muß gleichmäßig erfolgen. Sie führt durch Aufschluß der geschlossenen Poren zu einer Lockerung des Korngefüges, so daß die Körner besser an anhaftenden Verunreinigungen gesäubert werden können.

Demzufolge liegt der Erfindung die Aufgabe zugrunde, ein Verfahren zu schaffen, bei dem die Behandlung der Körner unterschiedlicher Größe in unterschiedlicher Weise erfolgt, um Verunreinigungen zu entfernen und um ein möglichst reines Produkt zu bekommen; andererseits sollen Kaliumchloridkröner geschaffen werden, die ein enges Kornspektrum aufweisen und jedenfalls einen ausgeglichenen Reinheitsgrad besitzen.

Erfindungsgemäß wird das dadurch erreicht, daß

a) das Kaliumchlorid im Lösegefäß durch eine Umlaufströmung in Schwebe gehalten wird, wobei

b) im Lösegefäß eine bestimmte Temperatur aufrechterhalten wird und sich die Kaliumchlorid-Lösung im ungesättigten Zustand befindet und wobei

c) die feineren Körner vollständig aufgelöst und die gröberen Körner so lange im Lösegefäß gehalten werden, bis - infolge des Lösevorganges - eine mittlere Korngröße erreicht wird,

d) die Körner mit einer mittleren Größe entgegen der Umlaufströmung durch ein Innenrohr im Lösegefäß abgezogen werden und wobei

e) die abgezogenen KCl-Kristalle zusammen mit der Kaliumchlorid-Lösung aus dem Lösegefäß einem Kristallisator zugeführt werden, in dem durch Wärmeentzug eine Übersättigung aufrechterhalten wird und in dem durch eine Umlaufströmung die KCl-Kristalle in Schwebe gehalten werden und wobei

f) mit zunehmender KCl-Kristallgröße ein Absinken der Kristalle stattfindet, wonach die abgesunkenen KCl-Kristalle über ein zentral angeordnetes Abzugsrohr im Kristallisator abgezogen und als Salzbrei in an sich bekannter Weise einem Trennvorgang unterworfen werden.

3

Die erste Stufe des Verfahrens (Merkmale a - d) sieht daher vor:

Reinigung der Kaliumchloridkörner durch Auslaugen, das durch gleichzeitige Anlösung beschleunigt wird. Der NaCl-Gehalt der ungesättigten Lösung wird unter 100 g/l, vorzugsweise unter 70 g/l gehalten.

In der zweiten Stufe (Merkmale e - f) kommt es zu einer Rückkristallisation, bei der sich das in Lösung gegangene Kaliumchlorid auf den eingesetzten gereinigten Körnern abscheidet. Dazu werden die Körner und die Lösung in ein weiteres Gefäß überführt und durch Temperatursenkung die für die Kristallisation erforderlichen Bedingungen geschaffen.

Die Auslaugungstemperatur im Lösegefäß kann im Bereich zwischen 30 und 90 °C, vorzugsweise aber im Bereich von 50 bis 70 °C, liegen. In diesem Bereich ist eine optimale Einstellung von Auslaugungsgeschwindigkeit, Umkristallisationsgrad, Kaliumchloridmenge in der Behandlungslösung gesichert.

Die Temperatur für die Rückkristallisation im Kristallisator sollte eine Differenz von 10 bis 40 °C gegenüber der Temperatur im Lösegefäß besitzen. Diese Temperaturdifferenz und die Menge der aus dem Auslaugungsbereich in den Kristallisationsbereich überführten Lösung bestimmen die Umkristallisationsrate des Prozesses.

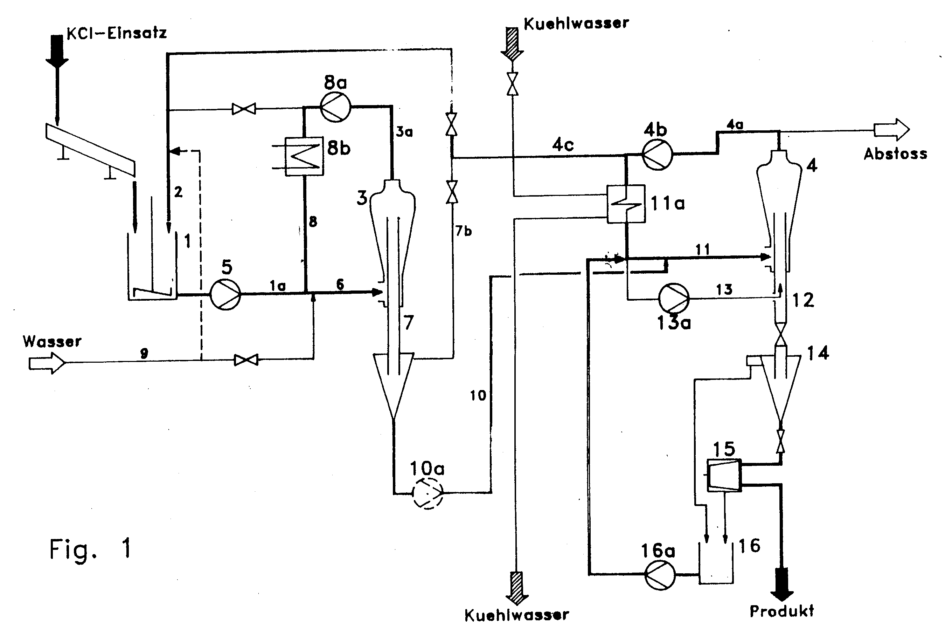

In Figur 1 ist eine schematische Darstellung des Verfahrens wiedergegeben.

Das Ausgangs-Kaliumchlorid wird in der Maische (1) mit der Anmaischlösung (2) suspendiert, die aus Rücklauflösung aus dem Kristallisator (4) (Löselauge 4a) und einem Anteil des Lösungsumlaufes (8) des Lösegefäßes (3) zusammengestellt wird. Durch die Pumpe (5) wird der Speisebrei in das Lösegefäß (3) eingeführt. In dem Lösegefäß (3) wird eine Untersättigung eingestellt, die zum Anlösen der Körner bzw. zum vollständigen Auflösen der kleinsten Körner führt. Die Körner werden mittels eines Lösungsumlaufs (8) in Schwebe gehalten. Durch einen Wärmeaustauscher (8b) wird die benötigte Wärme eingeführt, um die gewünschte Temperatur im Lösegefäß (3) zu sichern. Durch dieses Anlösen werden die gröberen Körner im Lösegefäß (3) bis zu einem gewünschten Durchmesser verkleinert. Die kegelartige sich nach oben erweiternde Form des Reaktors ermöglicht eine vertikale Klassierung. Dem Löseumlauf (8) kann Wasser zugeführt werden.

Durch ein Innenrohr (7), das durch Aufsätze unterschiedlich tief in den Lösereaktor hineinragen kann, werden die Körner, die einen kleineren als den gewünschten Durchmesser besitzen, ausgetragen. Andererseits verbleiben die Körner, deren Sinkgeschwindigkeit kleiner als die Lösungsaustrittsgeschwindigkeit ist, bis zur vollständigen Auflösung in dem Lösungsumlauf.

Die aus dem Lösegefäß abgezogenen Kristalle werden durch eine Abzugspumpe (10a) in den Kristallisator (4) eingeführt. Gleichzeitig wird eine bestimmte Lösungsmenge (10) aus dem Lösegefäß (3) abgezogen und in den Kristallisator (4) geleitet, wo eine tiefere Temperatur herrscht. Das führt zu einer Übersättigung in dem Kristallisator (4). Im Kristallisator (4) werden die Körner durch den Kreislauf (11) in Schwebe gehalten. Durch den Wärmeaustauscher (11a) wird die eingeführte Wärme abgezogen und eine Temperatur, die niedriger ist als die im Lösegefäß (3), gesichert. Die Steuerpumpe (13a) ermöglicht durch variierbare Einstellung des gepumpten Volumens die Gewinnung eines unterkornfreien Kristallisates. Die nach der Rückkristallisation ausgetragenen Körner werden mittels des Abzugrohres (12) in einem Salzbreigefäß (14) gesammelt und anschließend in der Schleuder (15) von der Mutterlauge getrennt. Das Filtrat wird im Gefäß (16) gesammelt und durch die Pumpe (16a) in den Kreislauf (11) zurückgepumpt.

Die aus dem Lösegefäß (3) in den Kristallisator (4) umgeführte Lösung (10) transportiert die aufgelöste Menge Kaliumchlorid aus der behandelten Probe in das Kristallisationsgefäß. Dort scheidet diese Menge während der Rückkristallisation auf die gereinigten Körner aus.

Um die partielle Umkristallisation variabel einstellen zu können, ist ein Steuerkreislauf (7b) vorgesehen. Die Temperaturdifferenz und der Lösungsaustausch zwischen dem Lösegefäß (3) und Kristallisator (4) bestimmen den mittleren Umkristallisationsgrad. Die Temperatur in dem Löser (3) kann zwischen 30 und 90 °C gehalten werden, wobei ein Wert im Bereich von 50 - 70 °C zu bevorzugen ist. Die Einstellung dieser Temperatur wird durch den Wärmetauscher (8b) gesichert. In dem Kristallisator (4) herrscht eine um 10 - 40 °C tiefere Temperatur.

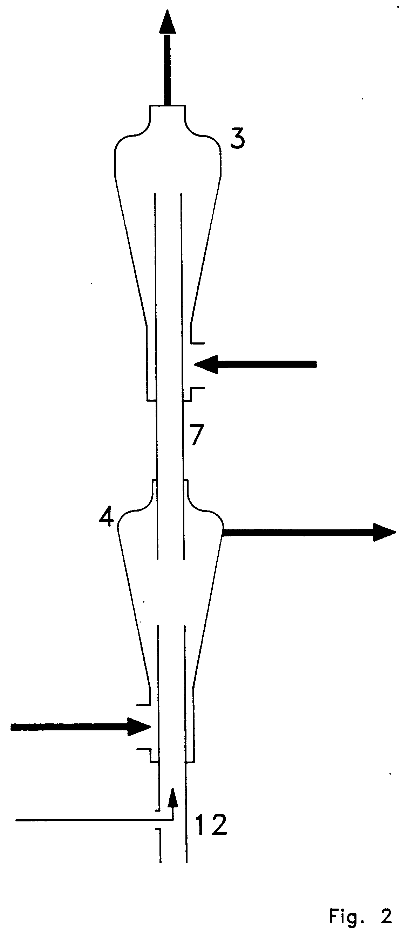

Eine Vereinfachung bei der apparativen Gestaltung des Verfahrens läßt sich durch Einsatz eines kombinierten Reaktors (Figur 2) verwirklichen. Das Lösegefäß (3') und der Kristallisator (4') sind unmittelbar miteinander verbunden. Als Verbindungselement dient das Verbindungsrohr (7'), das die Überführung von Körnern und Lösung aus dem Auslaugungs- in das Kristallisationsgefäß ermöglicht. In diesem Falle entfällt die Salzbreiabzugspumpe (10a).

Im folgenden Beispiel wird das Kaliumchlorid-Kristallisat bei folgenden Bedingungen behandelt:

Auslaugungstemperatur 60 °C

Kristallisationstemperatur 35 °C

Durchsatz 0,5 kg/h

Natriumchloridgehalt in der Behandlungslösung 70 g/l

Umkristallisationsgrad 20 %

Die Ausgangs- und Enddaten für das Kornspektrum und den erzielten Reinheitsgrad der wichtigsten Verunreinigungen sind in den Tabellen 1 und 2 wiedergegeben.

Der Hauptverunreiniger Natriumchlorid sinkt von 3,66 auf 0,24 Gew.-% trotz sehr hoher Natriumchloridgehalte in der Behandlungslösung. Darüber hinaus zeigt sich eine ausgeglichene Verteilung bezüglich der Korngröße.

Gleichzeitig ist auch eine deutliche Verengung des Kornspektrums entstanden. Insbesondere ist der Anteil der feineren Körner stark reduziert.

**Tabelle Nr. 1:** Ausgangsprodukt

| Kornspektrum | | Hauptverunreinigungen [Gew.-%] | | | | Spurenelemente [mg/kg] | | |
|---|---|---|---|---|---|---|---|---|
| Korngröße [μm] | Kornanteil [Gew.-%] | NaCl | Mg | Ca | $SO_4$ | Cr | Ni | Fe |
| <160 | 3,6 | 3,02 | 0,12 | 0,08 | 0,36 | 0,15 | 0,12 | 8,5 |
| 200 | 8,1 | 2,85 | 0,10 | 0,09 | 0,31 | 0,08 | 0,06 | 3,0 |
| 250 | 14,6 | 3,03 | 0,09 | 0,09 | 0,30 | 0,08 | 0,05 | 3,5 |
| 315 | 17,5 | 3,35 | 0,10 | 0,09 | 0,33 | 0,05 | 0,03 | 2,5 |
| 400 | 20,4 | 3,69 | 0,11 | 0,10 | 0,36 | 0,04 | 0,03 | 2,5 |
| 500 | 19,4 | 4,07 | 0,12 | 0,10 | 0,40 | 0,04 | 0,03 | 3,0 |
| 630 | 12,0 | 4,50 | 0,13 | 0,11 | 0,42 | 0,04 | 0,03 | 2,5 |
| >630 | 4,3 | 4,90 | 0,14 | 0,12 | 0,47 | 0,05 | 0,04 | 2,5 |

EP 0 627 384 B1

**Tabelle Nr. 21  Endprodukt**

| Kornspektrum | | Hauptverunreinigungen [Gew.-%] | | | | Spurenelemente [mg/kg] | | |
|---|---|---|---|---|---|---|---|---|
| Korngröße [µm] | Kornanteil [Gew.-%] | NaCl | Mg | Ca | SO$_4$ | Cr | Ni | Fe |
| <160 | 1,4 | 0,25 | 0,04 | 0,03 | 0,04 | 0,05 | 0,05 | 3,5 |
| 200 | 1,9 | 0,24 | 0,03 | 0,02 | 0,04 | 0,04 | 0,05 | 2,1 |
| 250 | 4,4 | 0,25 | 0,02 | 0,02 | 0,03 | 0,02 | 0,02 | 1,7 |
| 315 | 9,6 | 0,25 | 0,03 | 0,02 | 0,04 | 0,02 | 0,01 | 1,5 |
| 400 | 18,8 | 0,25 | 0,04 | 0,03 | 0,03 | 0,01 | 0,01 | 0,9 |
| 500 | 26,3 | 0,25 | 0,02 | 0,03 | 0,04 | 0,01 | 0,01 | 0,9 |
| 630 | 24,7 | 0,23 | 0,04 | 0,04 | 0,05 | 0,01 | 0,01 | 0,9 |
| >630 | 12,9 | 0,22 | 0,04 | 0,03 | 0,06 | 0,01 | 0,02 | 1,1 |

## Patentansprüche

1.  Verfahren zur Behandlung eines Kaliumchloridgemenges mit Körnern unterschiedlicher Größe, insbesondere mit Körnern mit einem Durchmesser von bis zu 1,5 mm, bei dem das trockene oder feuchte Kaliumchlorid mit einer Kaliumchlorid-Lösung angemaischt und im kontinuierlichen Kreislauf einem Lösegefäß zugeführt wird, dadurch gekennzeichnet, daß

    a) das Kaliumchlorid im Lösegefäß durch eine Umlaufströmung in Schwebe gehalten und gleichzeitig einer Klassierung unterzogen wird, wobei

b) im Lösegefäß eine bestimmte Temperatur aufrechterhalten wird und sich die Kaliumchlorid-Lösung im ungesättigten Zustand befindet und wobei

c) die feineren Körner vollständig aufgelöst und die gröberen Körner so lange im Lösegefäß gehalten werden, bis - infolge des Lösevorgangs - eine mittlere Korngröße erreicht wird, die Körner mit einer mittleren Größe entgegen der Umlaufströmung durch ein Innenrohr im Lösegefäß abgezogen werden und wobei

d) die abgezogenen KCl-Kristalle zusammen mit einer bestimmten variierbaren Menge Kaliumchlorid-Lösung aus dem Lösegefäß einem Kristallisator zugeführt werden, in dem durch Wärmeentzug eine Übersättigung aufrechterhalten wird und in dem durch eine Umlaufströmung die KCl-Kristalle in Schwebe gehalten werden, wobei

e) mit zunehmender KCl-Kristallgröße ein Absinken der Kristalle stattfindet, wonach die abgesunkenen KCl-Kristalle über ein zentral angeordnetes Abzugsrohr im Kristallisator abgezogen und als Salzbrei in an sich bekannter Weise einem Trennvorgang unterworfen werden.

2. Verfahren nach Anspruch 1, dadurch gekennzeichnet, daß dem Lösegefäß (3) ein Lösungskreislauf (8) zugeordnet ist, in dem ein Wärmeaustauscher (8b) eingeschaltet ist, wobei diesem Kreislauf (8) Wasser zugeführt wird.

3. Verfahren nach Anspruch 1, dadurch gekennzeichnet, daß dem Kristallisator (4) ein Lösungskreislauf (11) zugeordnet ist, in dem ein Wärmeaustauscher (11a) angeordnet ist.

4. Verfahren nach Anspruch 1, dadurch gekennzeichnet, daß die Temperatur im Lösegefäß (3) zwischen 30 °C und 90 °C, vorzugsweise zwischen 50 °C und 70 °C, beträgt.

5. Verfahren nach Anspruch 1, dadurch gekennzeichnet, daß die Temperatur im Kristallisator (4) um 10 °C bis 40 °C tiefer liegt als im Lösegefäß (3).

6. Verfahren nach Anspruch 1, dadurch gekennzeichnet, daß der Natriumchloridgehalt in der ungesättigten Lösung unter 100 g/l, vorzugsweise unter 70 g/l, gehalten wird.

7. Vorrichtung zur Durchführung des Verfahrens nach Anspruch 1, dadurch gekennzeichnet, daß ein konisches Lösegefäß (3) mit einem zentrischen Innenrohr (7), das durch Aufsätze unterschiedlich tief in das Feststoffbett eingetaucht werden kann, und durch einen zugeordneten Kreislauf (8) zum Abzug der Lösung aus dem Lösegefäß (3) sowie einem darin angeordneten Wärmetauscher (8b), der mit Anmaischzuleitung (1a) zum Lösegefäß (3) in Verbindung steht, und durch einen Kristallisator (4), der mit einer Leitung (10) mit dem Innenrohr (7) des Lösegefäßes (3) zum Zweck der Überführung von Lösung und Feststoff aus dem Lösegefäß (3) und mit einer Leitung (4c) zum Zweck der Rückführung der Lösung ins Lösegefäß (3) verbunden ist.

8. Vorrichtung zur Durchführung des Verfahrens nach Anspruch 1, dadurch gekennzeichnet, daß das zentrische Innenrohr (7) unmittelbar in den Kristallisator (4) einmündet.

**Claims**

1. A method of treating a mixture of potassium chloride with grains of different sizes, in particular with grains of a diameter of up to 1.5 mm, in which the dry or moist potassium chloride is made into a mash with a potassium chloride solution and fed in a continuous circuit to a dissolving vessel, characterised in that

a) the potassium chloride is kept in suspension in the dissolving vessel by a circulatory flow and at the same time subjected to a grading procedure, wherein

b) a certain temperature is maintained in the dissolving vessel and the potassium chloride solution is in the unsaturated condition and wherein

c) the finer grains are completely dissolved and the coarser grains are retained in the dissolving vessel until - as a result of the dissolving procedure - a mean grain size is reached, and the grains with a mean size are removed in opposite relationship to the circulatory flow through an inner pipe in the dissolving vessel and wherein

d) the removed KCl-crystals together with a given variable amount of potassium chloride solution from the dissolving vessel are fed to a crystalliser in which a condition of supersaturation is maintained by the removal of heat and in which the KCl-crystals are held in suspension by a circulatory flow, wherein

e) with increasing KCl-crystal size the crystals sink down, whereafter the KCl-crystals which have sunk down are removed by way of a centrally arranged removal pipe in the crystalliser and as a salt slurry subjected to a separation procedure in per se known manner.

2. A method according to claim 1 characterised in that associated with the dissolving vessel (3) is a solution circuit (8) in which a heat exchanger (8b) is incorporated, water being fed to said circuit (8).

3. A method according to claim 1 characterised in that associated with the crystalliser (4) is a solution circuit (1) in which a heat exchanger (11a) is arranged.

4. A method according to claim 1 characterised in that the temperature in the dissolving vessel (3) is between 30°C and 90°C, preferably between 50°C and 70°C.

5. A method according to claim 1 characterised in that the temperature in the crystalliser (4) is lower by 10°C to 40°C than in the dissolving vessel (3).

6. A method according to claim 1 characterised in that the sodium chloride content in the unsaturated solution is kept below 100 g/l, preferably below 70 g/l.

7. Apparatus for carrying out the method according to claim 1 characterised in that a conical dissolving vessel (3) with a central inner pipe (7) which by fitments can be immersed to different depths in the solids bed, and by an associated circuit (8) for removal of the solution from the dissolving vessel (3) and a heat exchanger (8b) which is arranged therein and which is in communication with the mash feed line (1a) to the dissolving vessel (3), and by a crystalliser (4) which is connected with a line (11) to the inner pipe (7) of the dissolving vessel (3) for the purposes of transfer of solution and solid material from the dissolving vessel (3) and to a line (4c) for the purposes of returning the solution into the dissolving vessel (3).

8. Apparatus for carrying out the method according to claim 1 characterised in that the central inner pipe (7) opens directly into the crystalliser (4).

**Revendications**

1. Procédé de traitement d'un mélange de chlorure de potassium ayant des grains de dimensions différentes, notamment des grains d'un diamètre allant jusqu'à 1,5 mm, qui consiste à tremper le chlorure de potassium sec ou humide dans une solution de chlorure de potassium et à l'envoyer en circuit continu à un récipient de dissolution, caractérisé en ce qu'il consiste

a) à maintenir le chlorure de potassium en suspension dans le récipient de dissolution par un courant tournant,

b) une température déterminée étant maintenue dans le récipient de dissolution et la solution de chlorure de potassium s'y trouvant à l'état insaturé, et

c) les grains fins étant entièrement dissous et les grains grossiers étant maintenus dans le récipient de dissolution jusqu'à ce que, à la suite de l'opération de dissolution, on atteigne une granulométrie moyenne, les grains de dimensions moyennes étant soutirés en sens inverse du courant tournant par un conduit intérieur dans le récipient de dissolution, et

d) les cristaux de KCl soutirés étant envoyés, en même temps qu'une quantité déterminée variable de solution de chlorure de potassium provenant du récipient de dissolution, à un cristallisoir dans lequel une sursaturation est maintenue par absorption de chaleur et dans lequel les cristaux de KCl sont maintenus en suspension par un courant tournant,

e) une descente des cristaux ayant lieu au fur et à mesure que les dimensions des cristaux de KCl augmentent, les cristaux de KCl qui descendent étant retirés par un conduit d'évacuation disposé au centre dans le cristallisoir et étant soumis en tant que purée de sel à une opération de séparation connue en soi.

2. Procédé suivant la revendication 1, caractérisé en ce qu'au récipient (3) de dissolution est associé un circuit (8) pour la solution, dans lequel est monté un échangeur de chaleur (8b), de l'eau étant envoyée à ce circuit (8).

3. Procédé suivant la revendication 1, caractérisé en ce qu'au cristallisoir (4) est associé un circuit (11) pour la solution, dans lequel est monté un échangeur de chaleur (11a).

4. Procédé suivant la revendication 1, caractérisé en ce que la température dans le récipient (3) de dissolution est comprise entre 30°C et 80°C et de préférence, entre 50°C et 70°C.

5. Procédé suivant la revendication 1, caractérisé en ce que la température dans le cristallisoir (4) est plus basse de 10°C à 40°C que dans le récipient (3) de dissolution.

6. Procédé suivant la revendication 1, caractérisé en ce qu'il consiste à maintenir la teneur en chlorure de sodium de la solution insaturée à une valeur inférieure à 100 g/l, de préférence inférieure à 70 g/l.

7. Installation pour la mise en oeuvre du procédé suivant la revendication 1, caractérisé par un récipient (3) conique de dissolution ayant un conduit (7) intérieur au centre, qui, par des garnitures, peut être plongé à une profondeur différente dans le lit de matières solides, et par un circuit (8) associé pour retirer la solution du récipient (3) de dissolution ainsi que par un échangeur (8b), qui y est disposé et qui communique avec un conduit d'amenée (1a) du mélange de trempe au récipient (3) de dissolution et par un cristallisoir (4) qui communique par un conduit (10) avec le conduit (7) intérieur du récipient (3) de dissolution en vue de transvaser la solution et la matière solide hors du récipient (3) de dissolution et avec un conduit (4c) destiné à retourner la solution dans le récipient (3) de dissolution.

8. Installation pour la mise en oeuvre du procédé suivant la revendication 1, caractérisée en ce que le conduit (7) intérieur disposé au centre débouche directement dans le cristallisoir (4).

Fig. 1

KCl-Einsatz

Kuehlwasser

Abstoss

Wasser

Kuehlwasser

Produkt

EP 0 627 384 B1

Fig. 2